(19) Europäisches Patentamt
European Patent Office
Office européen des brevets

(11) Publication number: **0 490 026 A2**

# (12) EUROPEAN PATENT APPLICATION

(21) Application number: **91114154.7**

(22) Date of filing: **23.08.91**

(51) Int. Cl.[5]: **C08G 18/08**, C08G 18/32, C08G 18/42, C08G 18/76, C09J 175/04, C08J 5/12

(30) Priority: **10.12.90 US 624618**

(43) Date of publication of application: **17.06.92 Bulletin 92/25**

(84) Designated Contracting States: **AT BE CH DE DK ES FR GB GR IT LI LU NL SE**

(71) Applicant: **H.B. FULLER LICENSING & FINANCING, INC.**
**1100 North Market Street, Suite 780**
**Wilmington, Delaware 19890(US)**

(72) Inventor: **Ryan, Christopher M.**
**11130 256th Street**
**Chisago City, Minnesota 55013(US)**

(74) Representative: **Eisenführ, Speiser & Partner**
**Balanstrasse 55**
**W-8000 München 90(DE)**

## (54) Improved aqueous emulsion dispersion adhesives based on a polyol and a hindered isocyanate compound.

(57) Improved polymeric aqueous adhesive dispersions can be made based on a reaction between a nonionic or anionic functional polyol and an aliphatic hindered isocyanate compound. The aqueous adhesive dispersion substantially free of reactive NCO functionality can be used in the preparation of laminates formed by adhering one sheet-like substrate to another. The formulations disclosed process easily, have low prepolymer viscosity, bond laminate structures and have a commercially useful pot life.

EP 0 490 026 A2

## Field of the Invention

The invention relates to improved aqueous dispersions of adhesive polymers. More particularly, the invention relates to high performance laminates made by adhering sheet-like substrates using an improved aqueous dispersion adhesive based on a reaction between an anionic or nonionic functional polyol and a hindered isocyanate compound.

## Background of the Invention

In general, the use of aqueous dispersions of adhesive materials are well known. Such adhesive materials can come from a variety of compound and polymer classes and can form adhesive bonds using a variety of different chemical or physical transformations. One particularly useful class of adhesive dispersions involve the use of isocyanate compounds or a polyurethane in combination with other general classes and ingredients. Such isocyanate based dispersions have been used in the past to form adhesive bonds, coatings, or other functional structures wherein post application curing is an important aspect.

One particularly important application of such adhesive dispersions is in the manufacture of laminates from sheet-like substrates. In such laminate preparation, the aqueous dispersion is applied to a sheet-like substrate forming an adhesive line or film. Solvent or water is permitted to evaporate from the adhesive film and the film is contacted with a second sheet-like substrate under typical laminating conditions of temperature, pressure or other bond forming condition to join the sheet-like substrates into a laminate structure.

In large part, the prior art adhesive dispersion use - NCO terminated polymers or compounds or blocked -NCO polymers or compounds. Such isocyanate adhesives use the reactivity of the -NCO group and have been found to have a variety of processing drawbacks including unstable or difficult to make dispersion properties, light sensitivity, short pot life, etc. The isocyanate polymer dispersion materials, when held at application temperatures prior to application to a substrate material, can pre-react, separate or can tend to cause gelation in particular during adhesive manufacture. The pre-reaction can be a reaction of -NCO groups with active hydrogens forming urea or carbamyl bonds or can be an -NCO trimerization into isocyanurate. These isocyanate reactions are generally promoted by amine compounds such as tertiary amines used to stabilize these types of dispersion systems but can also act as catalysts for the undesirable trimerization reaction. Because of this pre-reaction, insufficient bond strength can result when the laminate material is formed. Further, many polymeric dispersions based on isocyanate compounds can be resistant to forming dispersions and any dispersion formed can become unstable after manufacture. The typical isocyanate polymer found in the prior art tends to have high molecular weight and high viscosity limiting its utility in aqueous dispersions.

Witt et al., U.S. Patent No. 3,870,684 discloses a broad range of aqueous, NCO terminated, polyurethane prepolymers having acid functionality which can be reacted with chain lengthening agents including glycols and amines. The polyurethane prepolymers are derived from highly reactive aromatic and primary and secondary aliphatic isocyanates which can quickly form unmanageable gels unless the reactants and reaction conditions are carefully controlled.

Scriven et al., U.S. Patent Nos. 4,066,591 and 4,147,679 discloses coating compositions using urethane chemistry. An NCO- terminated prepolymer containing acid salt groups is shown with a tertiary amine to neutralize excess acid within the prepolymer. Again, careful control of reactants and reaction conditions are necessary to reduce and/or prevent the gelling of the prepolymer which is derived from highly reactive aromatic and primary and secondary aliphatic isocyanates.

Kucera et al., U.S. Patent No. 4,540,633 discloses adhesive compositions comprising dispersed epoxies and dispersed polyurethanes.

Ramalingam, U.S. Patent No. 4,851,459 discloses water dispersed polyurethane systems in which NCO terminated prepolymers are reacted with a peroxide compound containing at least one active hydrogen atom. These prepolymers may then be crosslinked using an epoxy functional compound.

Long, European Patent Application No. 369389 teaches NCO- terminated aqueous dispersions containing a variety of aromatic and aliphatic -NCO compounds in low molecular weight polymers.

"Aqueous polyurethane dispersions from TMXDI® (META) aliphatic isocyanate", American Cyanamide Company, February 1989 discloses the use of tetramethylxylene diisocyanate in the preparation of anionic dispersions of polyurethanes.

Arendt et al., "m- and p-TMXDI: Two New Isocyanates For The Polyurethane Industry", Journal of Cellular Plastics, November-December 1982 discloses the use, structure and properties of tetramethylxylene diisocyanates.

The adhesives discussed in the prior art set forth above all teach NCO- terminated prepolymers and fail to provide processing technology that provides stable easily made dispersions free of a water/-NCO pre-reaction or trimer formation from -NCO even in the presence of trialkyl amine. Further, light stability, low prepolymer viscosity and a commercial level of adhesive bonding strength are needed. For these reasons, a significant need exists for an aqueous adhesive dispersion made using a reaction between an anionic or nonionic functional polyol and an isocyanate that includes a low viscosity crosslinkable polymer, avoids the production of significant proportions of isocyanurate trimer in the dispersion, can react very slowly with water or other functional groups in the aqueous dispersion during manufacture and storage prior to application and can form high strength, high performance, light stable structural laminating adhesive bonds.

## Summary of the Invention

The invention relates to an aqueous dispersion adhesive used in the manufacture of laminate structures. We have found that the isocyanate chemistry can be used to form a crosslinkable polymer from a reaction between polyol and a hindered -NCO compound wherein the reaction product is substantially free of reactive -NCO activity. An aqueous adhesive dispersion can be made containing about 10 to 80 wt-% of the polymer and about 0.1 to 10 wt-% of a crosslinking agent that can react with active hydrogen functionality remaining in the polymer after its preparation is complete.

The aqueous dispersion is prepared from a low viscosity prepolymer prepared by reacting an aliphatic hindered isocyanate compound with at least an anionic or nonionic functional polyol. The polymer forming reaction can also involve chain extenders and chain terminators and can utilize functional compounds that, after polymer formation, add pendant reactive crosslinkable groups. After preparation, the resulting polymer is substantially free of -NCO for reaction with water. Further, the use of a hindered -NCO compound prevents isocyanurate trimer formation during polymer manufacture. The viscosity of the isocyanate prepolymer, prior to dispersion formation, is typically less than about 5000 cP. However, higher viscosities, if useful for a particular end use, can be made. The adhesive polymer material can contain pendant amine stabilized anionic groups which can act to maintain the dispersibility of the low viscosity isocyanate prepolymer in the aqueous dispersion. The dispersed polymer adhesive cures after application to the substrate by a crosslinking reaction between the polymer functional groups and reactive crosslinking agents. Preferably, an epoxy functional crosslinking agent is used that typically can link amino nitrogen atoms, pendant hydroxyl oxygen atoms, carboxyl groups, sulfhydryl groups or other groups with an active hydrogen or other reactive species, etc., in adjacent chain extended polymers using a reaction with a di- or tri- functional crosslinking agent. We have found that such polymeric dispersions are stable in the presence of water during storage and use due to the substantial absence of free reactive -NCO, generate little or no unwanted isocyanate trimerization products, have very slow reaction rates with other pendant functional groups on the solids of the dispersion, have a commercially useful pot life, and produce high quality, high performance, light stable laminating bonds after applications to the substrates.

In the formation of the preferred adhesive polymer dispersion of the invention, a preferred polymer can be manufactured by reacting the hindered di- or tri-isocyanate compound, an acid functional polyol, additional optional amounts of polyol free of acid functionality and amounts of chain extending agents and chain terminating agents that cooperate to control molecular weight. For the purposes of this invention, a chain extending agent is generally a low molecular weight or small molecule organic compound which after reaction between an isocyanate group on the growing polymer chain and an active hydrogen containing functional group on the chain extending agent, at least a second active hydrogen containing group remains free for further reaction with an isocyanate group tending to promote the growth of the polymer chain. A chain terminating agent comprises a relatively low molecular weight or small molecule organic compound which contains no more than one active hydrogen containing compound for reaction, at the reaction conditions of the preparations, with the isocyanate group. The chain terminating agents can contain more than one active hydrogen group. However, one active hydrogen can be more reactive than the other or can be used at a level permitting reaction with one functional group. After such reaction, no further groups are available for reaction with the isocyanate compound resulting in chain termination. In any case, the resulting polymer product of the manufacturing process of this invention is substantially free of reactive isocyanate groups, is typically hydroxy terminated, and has a substantial proportion of acid functional pendant groups which in combination with a neutralizing amine compound cooperate to stabilize the polymer in the aqueous dispersion. The adhesive polymer dispersion of the invention is preferably assembled by reaction between the hindered isocyanate compounds of the invention and terminal hydroxyl or amino functional groups in the polyol or chain extending or terminating agents resulting in linking urea or carbamyl groups in the polymer chain. The resulting hydroxyl, carboxyl and amino functionality in the polymer chain provides

ample reactivity for crosslinking with typical crosslinking reagents.

The aqueous adhesive dispersion can be applied to a first substrate, a second substrate can be contacted with the adhesive on the first substrate to form a laminate, and the laminate can be subjected to elevated pressure and temperature to form a cured adhesive bond.

Prior to deposition, the liquid dispersion composition of the present invention preferably remains storage stable and fully dispersed within the liquid vehicle. Storage stability in accordance with the present invention means that the level of particle separation or the degree of particle dispersion present after storage of the dispersion for the desired period of time does not change to a degree that the dispersion is broken or particle clumping can interfere with the formation of an effective bond. Moreover, the dispersion composition of the present invention remains substantially unreacted and the dispersion remains partially, if not wholly, undissolved in solvent over the intended storage period.

## Detailed Description of the Preferred Embodiment

The invention involves the use of a polymer dispersion made by reacting at least an anionic or nonionic functional polyol and a hindered isocyanate compound. The functional polymeric polyol compound has at least two active or reactive hydrogens, for reaction with the isocyanate groups, and sufficient nonionic or anionic character which can stabilize dispersion of the polymer in an aqueous vehicle. Optionally, the dispersed phase may also comprise fillers or other functional material depending on the intended application.

The polymer dispersion of the invention contains a polymer which is made by utilizing a reaction between an - NCO group and typically a hydroxyl group of a polyol. The di-, tri- or polyfunctional hindered isocyanate compounds are reacted with sufficient polyol to form a polymer chain wherein substantially all the -NCO groups are reacted with hydroxyl groups in polymer formation. The chemical and physical properties of the polymer can be adjusted by the addition of chain extending agents, chain terminating agents and other -NCO reactive compounds that can introduce pendant crosslinkable reactivity into the polymer chain. The molecular weight of the polymer can be managed by judicious addition of chain extending and chain terminating agents. The chemical reactivity of the polymer to crosslinking agents can be increased or modified by the addition of compounds which can react with -NCO functionality to introduce into the polymer chain crosslinkable groups. The polymer materials of the invention are made by adding reactants at ratios resulting in the presence of little or no active -NCO concentration after the polymer formation is complete. The resulting polymer contains substantial amino, carboxyl, hydroxyl or other active hydrogen functionality to enter into a reaction with crosslinking agents that can bind to active hydroxyl compounds to crosslink adjacent polymer chains forming a cohesive bond.

The hindered isocyanate compound can be any di-, tri-or polyfunctional isocyanate having tertiary aliphatic isocyanate functionality. Representative, non-limiting examples of such isocyanates include m-tetramethylxylene diisocyanate and p-tetramethylxylene diisocyanate. Typically, the hindered isocyanate compounds are reacted with polyfunctional di-, tri-, etc., polyol compositions having a molecular weight of greater than 500 to form the polymer composition. Such di-, tri- or polyol compositions can include nonionic or anionic groups, pendant on the polymer chain prior to reaction with the hindered isocyanate compound. Additionally, such functionality can be introduced by reaction with a small molecule anionic or nonionic functional compound with the polymer chain after or during reaction between the polymer and the hindered isocyanate functionality.

Preferably, the poly hydroxy polymer compound or polyol used to make the polymer of the invention has a molecular weight of 500 to 3,000, preferably 1,000 to 2,000. Such polymers can be polyester condensation products of commercially available of dicarboxylic acids and hydroxy compounds such as diols, triols, tetraols, etc. Additionally, such polymers can be polyether diols, triols, etc., based on polymers of ethylene oxide or propylene oxide.

The polyhydroxyl materials or polyols can be either low or high molecular weight materials and in general will have average hydroxyl values as determined by ASTM designation E-222-67, Method B, between about 1000 and 10, and preferably between about 500 and 50. The term "polyol" is meant to include materials having an average of two or more hydroxyl groups per molecule.

The polyols include low molecular weight diols, triols and higher alcohols, low molecular weight amide-containing polyols and higher polymeric polyols such as polyester polyols, polyether polyols and hydroxy-containing acrylic interpolymers.

The low molecular weight diols, triols and higher alcohols useful in the instant invention are known in the art. They have hydroxy values of 200 or above, usually within the range of 1500 to 2000. Such materials include aliphatic polyols, particularly alkylene polyols containing from 2 to 18 carbon atoms. Representative,

non-limiting examples include ethylene glycol, 1,4-butanediol, 1,6-hexanediol and cycloaliphic polyols such as 1,2-cyclohexanediol and cyclohexane dimethanol. Representative, non-limiting examples of triols and higher alcohols include trimethylol propane, glycerol and pentaerythritol. Also useful are polyols containing ether linkages such as diethylene glycol and triethylene glycol and oxyalkylated glycerol.

Where flexible and elastomeric properties are desired, the NCO-containing polymer should preferably contain at least a portion of a higher molecular weight polymeric polyol. Such a polymeric polyol should be predominantly linear (that is, absence of trifunctional or higher functionality ingredients) to avoid any chance of gelling of the resultant polymeric product and should have a hydroxyl value of 200 or less, preferably within the range of about 150 to 30.

The most suitable polymeric polyols include polyalkylene ether polyols including thio ethers, polyester polyols including polyhydroxy polyesteramides and hydroxyl-containing polycaprolactones and hydroxy-containing acrylic interpolymers.

Any suitable polyalkylene ether polyol may be used. Included are poly(oxytetramethylene) glycols, poly(oxyethylene) glycols, polypropylene glycols and the reaction product of ethylene glycol with a mixture of propylene oxide and ethylene oxide.

Also useful are polyether polyols formed from the oxyalkylation of various polyols, for example, glycols such as ethylene glycol, 1,6-hexanediol, Bisphenol A, and the like, or higher polyols, such as trimethylol propane, pentaerythritol and the like. Polyols of higher functionality which can be utilized as indicated can be made, for instance, by oxyalkylation of compounds as sorbital or sucrose. One commonly utilized oxyalkylation method is by reacting a polyol with an alkylene oxide, for example, ethylene or propylene oxide in the presence of an acidic or basic catalyst.

Besides poly(oxyalkylene)glycols, any suitable polyhydric polythioether may be used such as, for example, the condensation product of thioglycol or the reaction product of a polyhydric alcohol, such as disclosed herein for the preparation of hydroxyl polyesters, with thioglycol or any other suitable glycol.

An acid grafted polyether polyol comprising polypropylene oxide grafted with, for example, maleic or fumaric acid are taught in Frentzel et al., U.S. Patent No. 4,460,738 or Knopf et al., U.S. Patent No. 4,528,334.

Polyester polyols can also be used as a polymeric polyol component in the practice of the invention. The polyester polyols can be prepared by the polyesterification of organic polycarboxylic acids or anhydrides thereof with organic polyols. Usually, the polycarboxylic acids and polyols are aliphatic or aromatic dibasic acids and diols.

The diols which are usually employed in making the polyester include alkylene glycols, such as ethylene glycol and butylene glycol, neopentyl glycol and other glycols such as hydrogenated Bisphenol A, cyclohexane diol, cyclohexane dimethanol, caprolactone diol (for example, the reaction product of caprolactone and ethylene glycol), hydroxyalkylated bisphenols, polyether glycols, for example, poly(oxytetramethylene) glycol and the like. However, other diols of various types and, as indicated, polyols of higher functionality can also be utilized. Such higher polyols can include, for example, trimethylol propane, trimethylol ethane, pentaerythritol, and the like, as well as higher molecular weight polyols such as those produced by oxyalkylating low molecular weight polyols. An example of such high molecular weight polyol is the reaction product of 20 moles of ethylene oxide per mole of trimethylol propane.

The hindered polyfunctional isocyanate is reacted with a polymeric compound having pendant nonionic or anionic character that will permit formation of stable dispersions. Therefore, the polymer obtains some proportion of dispersibility from its pendant nonionic or anionic groups. Preferably, the groups are anionic, and more preferably they are acid functional anionic. Such groups can arise from the compounds used to prepare the polymer of the invention or can be derived from ionic compounds reacted with the polymer after reaction with the NCO compound. Such compounds used in such a reaction include hydroxy and mercapto carboxylic acids, amino carboxylic acids, aminohydroxy carboxylic acids, hydroxysulfonic acids, amino sulfonic acids, and amino hydroxysulfonic acids. Representative, non-limiting examples of such acids include dimethylylpropionic acid, glycolic acid, thioglycolic acid, lactic acid, malic acid, dihydroxymalic acid, tartaric acid, dihydroxytataric acid, 2,6-dihydroxybenzoic acid, oxaluric acid, and anilido acetic acid, glycine, $\alpha$-alanine, 6-aminocaproic acid, the reaction product of ethanolamine and acrylic acid, hydroxyethylpropionic acid, 2-hydroxyethane sulfonic acid and sulphanilic acid.

The acid anionic functionality of the polymeric polyol compound used in making the polymer of the invention can be stabilized using an amine preferably a tertiary amine compound. Tertiary amine compounds generally comprise a nitrogen atom having three typically aliphatic substituents. Such substituents can be $C_{1-15}$ alkyl groups, can contain cyclic aliphatic groups, the amine can form a portion of a cyclic aliphatic amine compound, etc. Specific examples of such tertiary amines include trimethyl amine, triethyl amine, tri-n-propyl amine, tri-n-butyl amine, n-methyl piperidine, n-ethyl piperidine, n-methyl pyrrolidine and

others. One particularly important advantage of the dispersions of the invention is that the materials can be stabilized using a tertiary amine which can catalyze the trimerization of isocyanate compounds. We have found that the aliphatic hindered isocyanate compounds of this invention will not trimerize in the dispersions of the invention providing an important stability advantage.

About 0.1 to 10 wt-% of other compounds containing active hydrogen atoms may be incorporated into the prepolymer. These compounds contain active hydrogen functional groups which react with an -NCO group more rapidly than the reaction of -NCO with water. The chain extender compound may be monofunctional, difunctional, trifunctional, etc. Non-limiting examples include di- or tri- hydroxide compounds, diamine or triamine compounds, amines including polyamines, amino alcohols and mercapto-terminated derivatives of amines and polyhydroxy materials may be incorporated into polymeric adhesive dispersion.

The di- tri-, etc., amines which can be employed as chain extenders in the preparation of the urethanes of the invention can be primary or secondary diamines or polyamines in which the radicals attached to the nitrogen atoms can be saturated or unsaturated, aliphatic, alicyclic, aromatic, aromatic-substituted aliphatic, aliphatic-substituted aromatic or heterocyclic. Mixed amines in which the radicals are different such as, for example, aromatic and aliphatic can be employed and other non-reactive groups can be present attached to the carbon atom, such as oxo, sulfo, halo or nitroso. Representative, non-limiting examples of suitable aliphatic and alicyclic diamines include 1,2-ethylene diamine, 1,2-propylene diamine, 1,8-menthane diamine, isophorone diamine, propane-2,2-cyclohexyl amine, methane-bis-(4-cyclohexyl amine), and

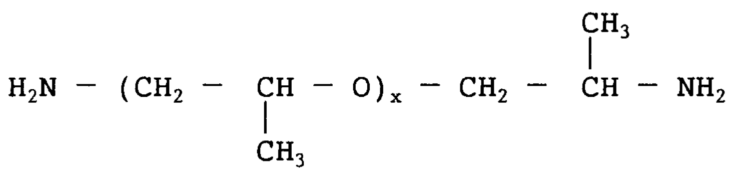

where x = 1 to 10.

Aromatic diamines such as the phenylene diamines and the toluene diamines can be employed. Exemplary of the aforesaid amines are: o-phenylene diamine and p-tolylene diamine. N-alkyl and N-aryl derivatives of the above amines can be employed such as, for example, N,N'-dimethyl-o-phenylene diamine, N,N'-di-p-tolyl-m-phenylene diamine, and p-aminodiphenylamine.

Polynuclear aromatic diamines can be employed in which the aromatic rings are attached by means of a valence bond such as, for example, 4,4'-biphenyl diamine, methylene dianiline and monochloromethylene dianiline.

Aminoalcohols, mercapto-terminated derivatives and mixtures, and the like, can also be employed as the active hydrogen compounds. Representative, non-limiting examples include monoethanolamine, N-(hydroxyethyl-)ethylene diamine and p-aminophenol.

The aqueous dispersion of adhesives of the invention can contain a variety of crosslinking agents that can crosslink chain lengthened isocyanate polymers into a rigid structural bond. Such crosslinking agents are compounds reactive with pendant nonionic groups, pendant anionic groups, chain nitrogen atoms, hydroxyl groups or other chain lengthened isocyanate polymer functionality.

The crosslinking agents bond adjacent polymer chains through the functionality creating a rigid crosslinked structural mass. Crosslinking (or curing agents) are agents having at least two chemical reactive groups that can react with adjacent polymer chains. Typically, the crosslinking agents are added to the dispersion. After the film is deposited onto a substrate, the agents then react with the existing polymer functionality causing the film to cure. Examples of curing agents that are reactive with the chemical functionality of the dispersed polymer include aminoplast resins, formaldehyde, phenolic resins, alkoxyl silanes, organic polyisocyanates, epoxy containing organic materials, carbodiimide materials, aziridine materials, and epoxy containing organic reagents. Water soluble or water dispersible crosslinking agents are simply added to the finished dispersion materials. More hydrophobic materials such as some organic isocyanates and some epoxy containing organic materials must be pre-dissolved or pre-dispersed in solvent or water prior to the preparation of the final adhesive dispersions. Preferred curing agents for use in the invention are epoxy curing agents. Such epoxy compounds can be any small molecular or polymeric compound or mixtures thereof having 1,2-epoxy equivalency greater than 1. Epoxy equivalency greater than 1 indicates that the average number of 1,2-epoxy groups per molecule is greater than 1. Preferably, the epoxy equivalency is about 2 or more. The useful class of polyepoxies are the glycidyl ethers of polyphenols such as bisphenol A or a polyol such as butane diol.

The liquid phase of the present invention generally comprises a liquid vehicle and, optionally, dispersing agents, thixotropes or hardeners among other potential constituents which may be wholly or partially dissolved in the liquid phase of the present invention. The liquid vehicle facilitates transport and deposition of the adhesive used in the composition of the present invention. Generally, the liquid vehicle may be aqueous or predominantly aqueous with a minor amount (less than 50 vol-%) of organic solvent or vehicle. While the liquid vehicle does not interact with the thermoset, the liquid vehicle may generally be used to modify the effect of the thermoset by enhancing or reducing adhesion. Such a liquid vehicle is useful in minimizing environmental and safety hazards often prevalent with the use of volatile organic compound. Also, a mixture of aqueous and organic liquid vehicles may be useful in maintaining, for example, a curing agent and resin in separate phases, thus increasing the chemical ability and storage life of the present composition prior to application. Such a system will comprise a liquid vehicle or a combination of liquid vehicles which may completely solubilize the curing agent while retaining the thermoset resin in solid, undissolved form.

Most preferably, if minimal toxicity and flammability is desired the liquid vehicle is water. Generally, aqueous or an aqueous organic may avoid or reduce toxicity and volatility problems which may be prevalent with certain organic systems, and such a vehicle is generally compatible with many known powdered thermoset adhesive compositions resulting in an unreacted composition having an extended shelf life. Moveover, water may be readily vaporized to form a dried adhesive film.

Varying the concentration of the liquid vehicle promotes differing characteristics within the composition. For instance, reducing the concentration of liquid vehicle within the composition of the present invention may increase the viscosity of the composition. In contrast, increasing the concentration of liquid vehicle within the composition of the present invention may result in a much less viscous composition. Such a formulation allows for the application of a thinner adhesive coat.

Optionally, the composition of the present invention may also contain a dispersing agent dispersed as an element of the solid phase or dissolved dispersed as an element of the liquid phase. The dispersing agent functions to efficiently disperse the insoluble composition of the present invention. Dispersing agents may also be used to lower surface tension and modify rheology within the system providing a thermoset composition which has a higher degree of wettability once applied to the intended surface.

Dispersing agents which can be used in the composition of the present invention generally include any physical or electrical dispersant which is not deleterious to the stability or curing ability of the thermoset. The dispersing agents preferably does not affect the chemical stability of the aqueous adhesive by reducing shelf life either in the liquid state or in the solid film state prior to cure but after the composition is applied. To this end, dispersants used in the composition of the present invention may either be retained in the film once formed or vaporized upon evaporation of the liquid vehicle from the composition or upon curing of the thermoset.

In the liquid state, prior to application of the composition of the present invention, the concentration of dispersant within the present invention may generally vary from 0 wt-% to 5 wt-%.

## Preparation of the Polymer Dispersion

In a preferred embodiment, the polyfunctional polyol compound is reacted with the hindered aliphatic polyfunctional isocyanate in the presence of a strong catalyst at a temperature from about 40 to 140 °C, more preferably from about 50 to 120 °C, and most preferably, from about 60 to 100 °C. A representative non-limiting list of catalysts which may be used to drive this reaction includes t-amines and organometallics such as dibutyl tin dilaurate, tin oleate, lead naphthanate, etc. The hindered isocyanate can be reacted with the polyol at an -NCO/OH ratio of about greater than 1.1 moles of -NCO per mole of OH, preferably 1.2 moles to 2.0 moles -NCO per mole of OH and most preferably about 1.4 to 1.7 moles -NCO per mole of OH. When a small molecule polyol with pendant anionic functionality is used, the compound can be added at a rate of about 5 to 15 wt-% of the polyol. When used, the chain extending agent is added in a proportion that leaves less than 0.5 wt-%, generally less than 0.1 wt-%, preferably free of free reactive -NCO. The chain termination agent is used at an amount that controls molecular weight to about 1,500 to 10,000 and results in little free -NCO (i.e., less than 0.5 wt-%). The small molecule chain extending agent and the small molecule chain terminating agent, when used, are preferably added at a rate of less than about 5 wt-% of the polyol/isocyanate mix. If high molecular weight agents are used amounts should be adjusted accordingly.

The polymer dispersion can derive its anionic functionality from a polyfunctional polyol compound having preformed pendant anionic groups. Chain extending agents and chain terminating agents can be used to control molecular weight. Additionally, pendant anionic groups can be introduced into the growing

polymer chain by introducing into the reaction mixture compounds having anionic pendant functionality and two or more active hydrogen groups that can participate in the polymer forming reaction, thus leaving the pendant anionic groups on the polymer molecule. Typically, such compounds are di- or trihydroxy compounds having pendant carboxyl functionality.

After an anionic functional polymer is formed, the anionic functionality is neutralized or stabilized with a tertiary amine and the stabilized prepolymer is dispersed in deionized water. Optionally, the anionic functionality may be stabilized prior to formation of the polymer.

The resulting dispersion preferably has a solids content of about 10 to 80 wt-%, preferably about 20 to 60 wt-%, and most preferably from about 30 to 40 wt-%. Further, this polymer dispersion has a low viscosity of from about 25 to 2,000 cP, preferably from about 50 to 1,000 cP, and most preferably from about 100 to 300 cP. The dispersion also exhibits excellent stability characteristics.

Prior to the application of the polymer dispersion, about 0.01 to 10 parts by weight, preferably 0.05 to 5 parts of a crosslinking agent per part of the prepolymer is combined with the polymer dispersion. This agent may be added directly to the prepolymer or in an aqueous solution or dispersion. Materials which may be used to crosslink the prepolymer of the present invention are those materials which are capable of reacting with at least two of the polymer molecules to form a cohesive adhesive mass. After the addition of the crosslinking agent to the aqueous polymer dispersion, but before curing, the dispersion maintains a relatively low viscosity. Preferably, the viscosity is less than about 1,000 cP, and more preferably it is between about 100 and 500 cP. The aqueous adhesive dispersion preferably contains between 20 and 60 wt-% solids, and more preferably between 30 and 40 wt-% solids.

Application of the Adhesive

The aqueous adhesive dispersion of the present invention is very versatile as it can be applied in many conventional operations. Application may be performed by spraying, roll coating, the use of doctor blades, brushing and dipping. The adhesive can further be applied under a variety of conditions. The adhesive can further be applied to a wide variety of substrate including polyolefins, polyesters, metal films, polyethylene, low density polyethylene, nylon, PET, paper, cellophane, polypropylene, oriented polypropylene, linear low density polypropylene, etc. The substrate may have many useful properties, and it is preferred that the substrate has properties desired in the flexible packaging industry and the retortable packaging industry. Such properties including high tensile strength, vapor barrier properties, flexibility, rigidity, resistance to thermal degradation may be desireable depending upon the intended use of the laminate.

After the adhesive dispersion has been applied to the first substrate, it is preferably dried to form an adhesive film on the surface of the substrate. Any method known to those skilled in the art may be used to dry the adhesive, including conventional ovens, circulating ovens, infrared radiation, heat lamps, as well as flash drying the adhesive on the substrate surface. When a circulating oven is used, it is preferred that the adhesive is dried at a temperature of about 50 to 85°C at about ambient pressure for about 0.25 to 1 minute.

After the adhesive is dried on the first substrate, a second substrate is contacted with the adhesive film. This substrate may be of the same or different material in comparison to the first substrate. This second substrate can be applied to the adhesive film by application of pressures and temperatures commonly used in film laminating equipment. The use of different substrates allows one to prepare a laminate combining properties of rather varied substrates which properties would otherwise be impossible to contain in a single flexible film. Thus, it may be desirable to laminate one film having excellent moisture vapor barrier properties to another film having excellent strength characteristics. The choice of substrates would therefore be up to the skilled practitioner in this art to achieve a laminate of the particular desired properties for that user.

After the second substrate has been contacted with the adhesive layer, the bond may be cured by subjecting it to conditions which cause the crosslinking agent to react with the polyurethane prepolymer. The cure conditions are dictated by the crosslinking agent incorporated into the prepolymer. Preferably, this is done at elevated temperature and pressure. After this processing, the laminate shows superior adhesive properties. Such properties include excellent shear and peel results.

The present invention may be further understood by reference to the following specific examples which are illustrative of the method of forming the adhesive laminate of the present invention.

Example 1

About 73.8 g (0.074 eq) of a polyester polyol (2000 mw poly(neopentyl adipate) Ruco 107-55) was

placed in a 500 milliliter reaction kettle and dried in vacuo for about 45 minutes at about 70° C. About 64.2 g (0.12 eq) of an acid functional polypropylene glycol having an acid number of 55 and a hydroxyl value of 100 (Niax PWB 1200) was added to the reaction kettle. About 3 drops (about 130 microliters) of a solution of 65 wt-% lead napthanate in mineral spirits was added to the reaction kettle. Next, about 40.5 g (0.33 eq) of tetramethylxylene diisocyanate was added to the reaction kettle, and the mixture was stirred with heating at about 75° C. After 3 hours, the percent NCO was about 4.32% and after 4.25 hours, the percent NCO was 2.61%.

About 12.1 g triethylamine in 155 g of water was added to the polyurethane prepolymer. Once the dispersion was complete, about 4.26 g (0.041 amino eq) amino ethyl ethanol amine, about 1.5 g (0.05 amino eq) ethylenediamine and about 1.2 g (0.016 amino eq) tetraethyltetramine in 126 g of water were added to the prepolymer dispersion to provide chain extension. Next, an additional 33 g of water was added to the mixture to give about 36% solids.

Next, the prepolymer dispersion was mixed with an epoxy crosslinking agent having an epoxy equivalent to 190 in a 15:1 weight ratio. The viscosity of the resulting mixture is about 45 cP. A 5 mil wet adhesive film was drawn using a number 5 Mayer rod on a 4 mil PET film and dried in a forced air oven for 15, 30 and 90 seconds respectively at about 230° F. A second film of PET was placed over each of the first series of PET films and eight one inch strips cut out of each film using a metal template. Four strips were placed in a heat sealer and bonded using 4, 5, 7 and 10 second dwell times respectively at about 200° F and at 200 kPa. This was repeated using the four remaining strips at 400 kPa. The viscosity of the prepolymer dispersion and epoxy blend remained stable at about 45 cP for greater than 6 hours after preparation. After three days, 180° peel values had increased to about 400 to 450 g/in$^2$.

Example 2

259 g (0.52 eq) of a 1000 MW polypropylene glycol was dried under vacuum at about 100° C for about 1 hour. About 159 g (1.3 eq) tetramethylxylene diisocyanate was added, stirred for about 30 minutes and the temperature allowed to drop to about 80° C. Once the temperature has equilibrated, about 23 g (0.23 eq) triethylamine was added at once. Again the temperature was allowed to equilibrate and about 30 g (0.45 eq) dimethylolpropionic acid was added. After 4 hours the NCO was checked. About 582 g deionized water (582 g) was added and the mixture stirred until dispersion was complete (about 5 minutes). About 20 g (0.33 eq) monoethanolamine in about 100 g deionized water was added and stirring maintained for about 10 minutes followed by filtration of the product. pH = 8.0, solids = 40%.

Screening this product as a film laminating adhesive involved laminating a few substrates typical of flexible packaging and monitoring the 180° peel over time. About 10 parts of the urethane dispersion was blended with about 1 part of an epoxy crosslinking agent having epoxy equivalent weight of 190. The resultant mixture was diluted to about 30% solids and drawn on polyester film. The film was dried in a circulating oven at about 130° F for about 3 minutes. A second substrate was laminated to this and 1 inch test strips were cut. Each test strip was subjected to 40 psi at 160° F for 1 second. Accelerated curing was performed in an oven at 130° F for 20 hours. Half of the test strips were immersed in boiling water for one hour. All test strips were then tested for 180° peel at a rate of 12 inches per minute.

| Film Laminating Performance | | |
|---|---|---|
| Secondary Substrate | Without Water Boil | 1 Hour Water Boil |
| Polyethylene | Destruct | Destruct |
| Polypropylene | Destruct | 400 g/in |
| Polyester | 500 g/in | 100 g/in |
| Foil | 700 g/in | Destruct |

Lack of Undesired Side Reactions Available for a Hindered Isocyanate

To illustrate the lack of side reactions which a hindered isocyanate will undergo in the manufacture of polyurethane dispersions the following kinetics study was done.

In a vessel containing dry toluene was placed TMXDI (0.65M) and triethylamine (0.64M). The mixture was heated to 90° C. for 4 days during which time the unreacted isocyanate was monitored using the standard titration method. No change was observed which supports the inability of the hindered isocyanate

to undergo self reactions to form dimers or trimers.

Another reaction rate study was performed to verify the slower reactivity of hindered versus unhindered isocyanate with the carboxylic acid groups present in the polyurethane manufacturing process. A procedure identical to the one used above was carried out with the following combinations.

| | | Rate Constants (98 ° C.) |
|---|---|---|
| TMXDI | Acid | 6.2 X $10^{-6}$ 1 $eq^{-1}s^{-1}$ |
| H-MDI | Acid | 4.5 X $10^{-5}$ |
| TMXDI | Acid Amine | 4.6 X $10^{-6}$ |
| TMXDI | Alcohol Amine | 3.6 X $10^{-4}$ |
| TMXDI | Alcohol | 3.4 X $10^{-5}$ |

A hydrogenated MDI (H-MDI; typified by Desmodur W) was used as an unhindered isocyanate to compare with the hindered isocyanate. Triethylamine (amine) is typically used in the manufacture of the isocyanate. 2,2-dimethylbutyric acid (acid) is a carboxylic acid similar in structure to dimethylolpropionic polyol used in polyurethane synthesis.

The H-MDI/acid reaction formed a precipitate after only three hours accompanied by evolution of gas indicative of product formation. Isocyanates react with carboxylic acids to give an amide and $CO_2$. The inverse concentration of unreacted isocyanate was plotted versus time for each reaction as is common for second order reactions. From these plots rate constants could be calculated. The results shown in the Table illustrate the greater reactivity that an unhindered isocyanate has towards carboxylic acid groups than a hindered isocyanate even in the presence of amine catalyst.

The above descriptions and examples are provided to aid in a complete, non-limiting understanding of the invention. Since many variations of the invention can be made without departing from the spirit and scope of the invention, the breadth of the invention resides in the claims hereinafter appended.

**Claims**

**1.** An improved stable polyurethane aqueous dispersion adhesive having a commercially useful pot life, which adhesive comprises in an aqueous dispersion:
   (a) an effective amount of a polyurethane polymer derived from the reaction of a hindered polyfunctional aliphatic isocyanate compound and a polymeric polyol compound, said polyol having at least two isocyanate reactive hydrogens, said polymer having sufficient nonionic or anionic character to promote dispersion of the polymer in water; and
   (b) an effective amount of a crosslinking agent.

**2.** The adhesive of claim 1 wherein the hindered aliphatic isocyanate compound comprises tetramethyl xylene diisocyanate and the polyurethane aqueous dispersion has a viscosity of less than 5000 cP.

**3.** The adhesive of claim 1 wherein the polymeric polyol compound contains pendant anionic groups comprising a carboxylic group, a sulfonic acid group, or mixtures thereof.

**4.** The adhesive of claim 1 wherein the polymer anionic character is stabilized with a tertiary amine.

**5.** A method for preparing an improved laminate comprising:
   (a) applying a film of an aqueous adhesive dispersion to a substrate, said dispersion comprising:
      (i) about 20 to 60 parts of a polyurethane polymer derived from the reaction of a hindered polyfunctional aliphatic isocyanate and a polymeric polyol compound having at least two isocyanate reactive hydrogens, said polymer having sufficient nonionic or anionic character to promote dispersion of the polymer in water; and
      (ii) about 0.01 to 10 parts of a crosslinking agent per each one hundred parts of the polymer;
   (b) contacting a second substrate to the film; and
   (c) subjecting the film to sufficient elevated pressure and temperature to form an adhesive bond.

**6.** The method of claim 5 wherein the hindered polyfunctional isocyanate comprises tertiary isocyanate.

**7.** The method of claim 6 wherein the tertiary isocyanate comprises tetramethylxylene diisocyanate and

the polyurethane aqueous dispersion has the viscosity of less than about 5,000 cP.

**8.** The method of claim 5 wherein the polymer anionic character is stabilized with an amine.

**9.** The method of preparing a curable polyurethane polymer dispersion resulting in a stable dispersion having a commercially useful pot life which can cure to form light stable bonds, which process comprises:
(a) reacting a hindered aliphatic polyfunctional isocyanate compound and a polymeric polyol compound having at least two isocyanate reactive hydrogens, to make a polyurethane polymer having sufficient anionic character, to result in a stable aqueous dispersion;
(b) neutralizing pendant anionic functionality of the polymeric polyol with a trialkyl amine to form a stabilized polymer; and
(c) blending the stabilized polymer with a crosslinking agent.

**10.** The method of claim 9 wherein the crosslinking agent comprises a di-epoxy crosslinking agent.

**11.** The method of claim 10 wherein the dispersion has a viscosity of about 100 to 5,000 cP.

**12.** The method of claim 11 wherein the hindered aliphatic isocyanate compound comprises tetramethyl xylene diisocyanate and the aqueous dispersion has a viscosity of less than about 2,000 cP.

**13.** The method of claim 9 wherein the polymeric polyol compound has a molecular weight of greater than about 100 and contains pendant anionic groups derived from carboxylic groups, sulfonic acid groups, or mixtures thereof.

**14.** An improved stable polyurethane aqueous dispersion which comprises a polyurethane prepolymer derived from the reaction of a hindered polyfunctional aliphatic isocyanate compound and a polymeric polyol compound, said polyol having at least two isocyanate reactive hydrogens, said polymer having sufficient nonionic or anionic character to promote dispersion of the polymer in water wherein the isocyanate is reacted with the polyol at a ratio of about 1.1 to 4 moles of -NCO per mole of -OH in the polyol, and the dispersion is free of reactive -NCO.

**15.** The dispersion of claim 14 wherein the hindered aliphatic isocyanate compound comprises tetramethyl xylene diisocyanate and the polyurethane aqueous dispersion has a viscosity of less than 5000 cP.

**16.** The dispersion of claim 14 wherein the polymer anionic character is stabilized with a tertiary amine.

**17.** An improved laminate prepared using a polyurethane aqueous dispersion adhesive having a commercially useful pot life, which laminate comprises a substrate joined with a second substrate with an adhesive comprising, in an aqueous dispersion:
(a) an effective amount of a polyurethane polymer derived from the reaction of a hindered polyfunctional aliphatic isocyanate compound and a polymeric polyol compound, said polyol having at least two isocyanate reactive hydrogens, said polymer having sufficient nonionic or anionic character to promote dispersion of the polymer in water; and
(b) an effective amount of a crosslinking agent.

**18.** The laminate of claim 17 wherein the hindered aliphatic isocyanate compound comprises tetramethyl xylene diisocyanate and the polyurethane aqueous dispersion has a viscosity of less than 5000 cP.

**19.** The laminate of claim 17 wherein the polymer anionic character is stabilized with a tertiary amine.

**20.** The laminate of claim 18 wherein the crosslinking agent comprises a di-epoxy compound.